# EUROPEAN PATENT APPLICATION

(11) **EP 2 444 896 A1**
(43) Date of publication of application: **25.04.2012**
(21) Application number: 10013309.9
(22) Date of filing: 05.10.2010
(51) Int. Cl.: G06F 9/445

(54) **Automatic information capturing method for embedded system**

(71) Applicant: ABB Technology AG, 8050 Zürich (CH)
(72) Inventor: Stich, Christian, 69493 Hirschberg-Leutershausen (DE); Dix, Marcel, Dipl.-Inf., 68167 Mannheim (DE); Aleksy, Markus, 67071 Ludwigshafen (DE); Maczey, Sylvia, 69493 Hirschberg (DE)
(74) Representative: Partner, Lothar

(57) **Abstract**

The invention proposes an automatic information capturing method for embedded systems to know exactly the type, such as software and hardware type and configuration status of devices of this system,
- wherein at a starting point (A) a connection is established to a device to be maintained,
- wherein according a first method step (B) it is detected whether a connection to a central Configuration Management Database CMDB is possible,
- wherein according a second method step (C1) a connection to this central CMDB is established in case this is possible,
- wherein according a third method step (E) the service is processed on device,
- wherein according a fourth method step (F) current configuration information is sent to the connected CMDB,
- wherein according a fifth method step (G) the connection to CMDB is closed.

## Description

The invention relates to an information automatic information capturing method for embedded systems such as a controller systems or any kind of real-time systems.

Considering embedded systems, which are installed at customer's side world-wide, it is a challenge to know exactly the installed (software) configuration and (hardware) types of devices. Equipments configuration changes over the time, after installation, customer and service are updating or modifying the installed software. The operating system, but also the customer-tailored application, is affected. After a period of time, like a decade, it is during a service event a challenge for the service engineer to identify the installed software. In a re-active service event, the service engineer could be confronted with devices, which he had never maintained before. If a problem has to be solved rapidly, all required configuration information, suchlike device type (hardware), used device features, version numbers, binaries, customized application, and sometimes source codes as well as documentation should be available to fully understand and solve the problem at customer site.

A service provider acting globally has a large installed base and a quite limited number of experts, which are travelling around the globe. One challenge is to make all configuration information available during a service event. Another challenge is to identify equipment types and configurations world-wide which are affected by a modification.

For a service event it is difficult to identify the installed configuration, in most cases the service engineer will call colleagues to ask them about the history and the current installation. Also binary and source files are required, therefore before the customer visit, the service engineer will try to collect the required fragments, but in most of the cases it is unknown where the information was stored. After several years, it is quite difficult to identify the engineer, who compiled the last configuration and thereof to get the files.

For a new modification the installed base cannot be automatically identified. There is no central system in place, which outlines the current configuration. If a successor of a particular file, package, or configuration is developed, it is hard to determine which of the installed equipment is affected and requires this modification.

Without an integrated IT-system (Information Technology) all relevant information needs to be collected manually: by engineers, account managers, domain responsible, end customers, and by lots of them personal discussions and coordination is needed. This is time consuming and customers stay in a status of uncertainty.

One of the major challenges for an integrated IT-System that stores the information about the current configurations for the installed base is to keep the information up-to-date. As long as the field service engineer has to enter the relevant data manually it cannot be guaranteed that the data is always correctly entered in the Configuration Management Databases CMDB.

What is already common today: CMDB as defined by Information Technology Infrastructure Library ITIL. The state of the art today is storing the current installed configuration from an installed base angle, which does not address the development angle.

Therefore it is an object of the invention to provide an optimized automatic information capturing method for embedded systems in order to know exactly the type, such as software and hardware type and configuration status of devices of this system.

The problem is solved by an automatic information capturing method for embedded systems to know exactly the type, such as software and hardware type and configuration status of devices of this system,
- wherein at a starting point a connection is established to a device to be maintained,
- wherein according a first method step it is detected whether a connection to a central Configuration Management Database CMDB is possible,
- wherein according a second method step a connection to this central CMDB is established in case this is possible,
- wherein according a third method step the service is processed on device,
- wherein according a fourth method step current configuration information is sent to the connected CMDB,
- wherein according a fifth method step the connection to CMDB is closed.

It is an advantage that the proposed automatic information capturing method integrates development and service needs into one system with automatically gathering information from the field and requesting the history and the current valid configuration. Knowing the installed base and its configuration allows identification of affected devices if a patch is available. If a modification is offered from one of the development teams, then the team could easily select which device type (hardware) and feature is affected and where the equipment is installed. The customer with the installed equipment can be informed about a required and approved modification to keep his equipment secure.

In order to keep the knowledge of the installed base up-to-date and consistent it is essential that the data stored within the Configuration Management Database CMDB is updated after every service event that is processed on a device. The proposed method suggests an automatic process of transferring the relevant data to the CMDB to make sure the data is transferred to the CMDB for every service event.

### Further advantages of the invention are mentioned in the dependent claims.

The invention will now be further explained by means of exemplary embodiments and with reference to the accompanying drawings, in which:
- Figure 1: shows the successive method steps for a first alternative,
- Figure 2: shows the successive method steps for a second alternative.

A system for configuration management captures information about the installed base. Hereby, the installed base focus is embedded systems. During beginning of service and after each service event the devices are automatically reporting their current installed versions to a centralized system. The information flow could be established
- through direct internet connectivity or
- via service engineer's laptop (mobile device) during the maintenance of the embedded systems.

In case the central CMDB cannot be reached during a service event, it is possible to feed the information to a replication of the CMDB which will be synchronized later with the central system, which means as soon as a connection to the central database is possible. The replication of the CMDB has been stored in the mobile device of the service engineer, such as laptop, PDA (Personal Digital Assistant), Smartphone before starting to a customer with the considered embedded system.

By using this technology the CMDB always stores up-to-date information about the current configuration of the devices. This knowledge may be used to inform the service engineers responsible for the devices whenever modifications exist for the currently installed configuration. The knowledge of the installed base may also be of use for upcoming service events for a device. Furthermore it may be useful to the sales organization.

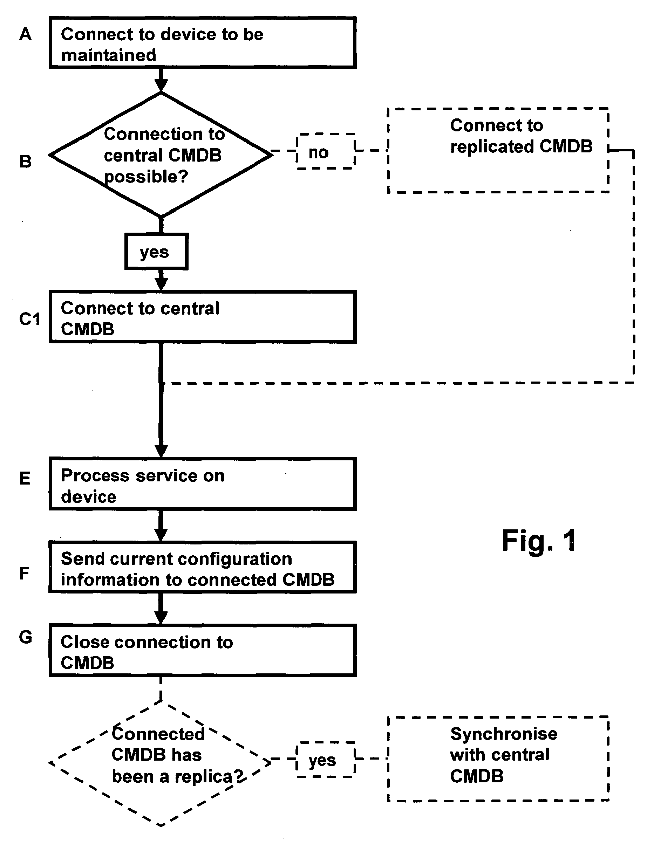

For the first alternative the process can be described by the following successive steps according Figure 1:

| | |
|---|---|
| Starting point A: | Connect to device to be maintained. |
| First method step B: | Query: Connection to central CMDB possible? The answer is "yes". |
| Second method step C1: | Connect to central CMDB. |
| Third method step E: | Process service on device. |
| Fourth method step F: | Send current configuration information to connected CMDB. |
| Fifth method step G: | Close connection to CMDB. |

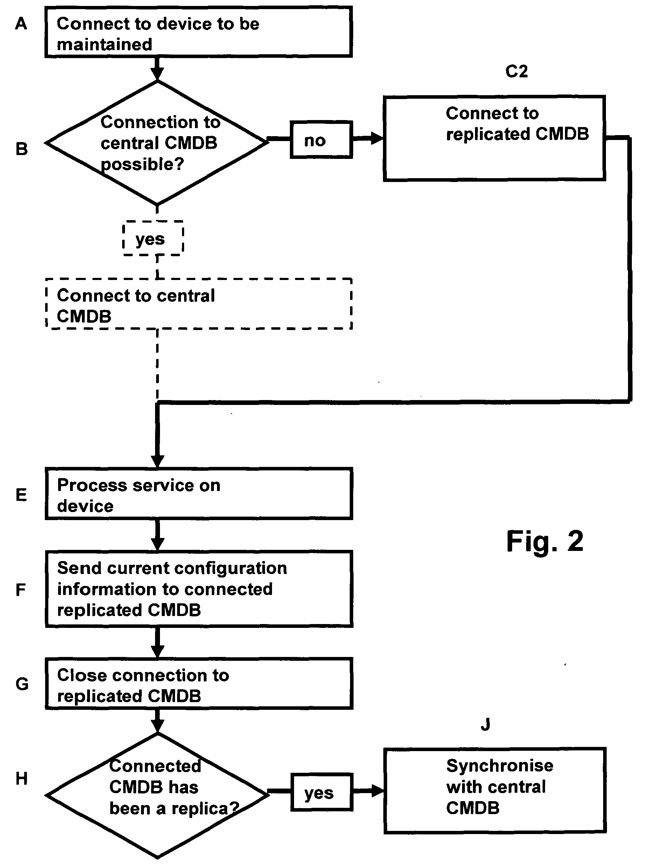

For the second alternative the process can be described by the following successive steps according Figure 2:

| | |
|---|---|
| Starting point A: | Connect to device to be maintained. |
| First method step B: | Query: Connection to central CMDB possible? The answer is "no". |
| Second method step C2: | Connect to a local replicated CMDB. |
| Third method step E: | Process service on device. |
| Fourth method step F: | Send current configuration information to connected replicated CMDB. |
| Fifth method step G: | Close connection to replicated CMDB. |
| Sixth method step H: | Query: Connected CMDB has been a replica? The answer is "yes". |
| Seventh method step J: | Synchronise replicated CMDB with central CMDM as soon as possible. |

### List of reference signs

- A: starting point
- B: first method step
- C1: second method step for the first alternative
- C2: second method step for the second alternative
- E: third method step
- F: fourth method step
- G: fifth method step
- H: sixth method step
- I: seventh method step

## Claims

1. Automatic information capturing method for embedded systems to know exactly the type, such as software and hardware type and configuration status of devices of this system,
- wherein at a starting point (A) a connection is established to a device to be maintained,
- wherein according a first method step (B) it is detected whether a connection to a central Configuration Management Database CMDB is possible,
- wherein according a second method step (C1) a connection to this central CMDB is established in case this is possible,
- wherein according a third method step (E) the service is processed on device,
- wherein according a fourth method step (F) current configuration information is sent to the connected CMDB,
- wherein according a fifth method step (G) the connection to CMDB is closed.

2. Method according claim 1, **characterized in that** according to an alternative second method step (C2) in case a connection to a central Configuration Management Database CMDB is not possible a connection to a local replicated CMDB is established.

3. Method according claim 2, **characterized in that** according a further method step (J) the replicated CMDB is synchronised with the central CMDM as soon as possible.
